# EUROPEAN PATENT SPECIFICATION

(11) **EP 0 281 370 B1**
(45) Date of publication and mention of the grant of the patent: **23.02.1994**
(21) Application number: 88301797.2
(22) Date of filing: 02.03.1988
(51) Int. Cl.: C10L 5/40, C10L 5/10

(54) **Briquet for gas and electric grills**
Brikett für einen elektrischen oder mit Gas betriebenen Rost
Briquette pour un grill électrique ou à gaz

(30) Priority: 02.03.1987 US 20760; 01.06.1987 US 56589
(43) Date of publication of application: 07.09.1988
(73) Proprietor: Hickory Specialties, Inc., Brentwood, Tennessee 37027 (US)
(72) Inventor: Crace, Robert Joseph, Tennessee (US)
(74) Representative: Stanley, David William

(56) References cited:
- FR-A- 324 808
- FR-A- 2 270 315
- GB-A- 127 775
- GB-A- 540 115
- US-A- 3 395 026

## Description

The present invention relates to combustible briquets of the type used for cooking various kinds of meat and other foods in a manner generally known as barbequing.

Briquets, commonly called "charcoal briquets", comprising combustible carbonaceous material are used extensively for cooking various kinds of meat and other foods on a grill in a manner generally known as barbequing. When meat or other foods are cooked by barbequing, the food is typically placed on a grill which is provided over a bed of charcoal or charcoal and wood briquets.

The resulting barbeque taste imparted to the meat or other foods cooked on the grill is due in part to the dry type of heat provided by the briquets and also in large measure due to the flavour imparted to the food by the combustion of the charcoal or charcoal and wood in the briquet. Typically, the wood within a briquet (normally in the form of sawdust) provides an aromatic smell and flavour to meat being barbequed and charcoal within a briquet provides a distinctive charcoal flavour to the meat.

As is known in the art, conventional briquets utilized to barbeque meat or other foods tend to shed ash as they burn, and are therefore not suitable for use in a gas or electric grill since the ash would be detrimental to the grill. This has resulted in the use of what is commonly called "lava rock" in lieu of charcoal briquets in gas and electric grills. The lava rock tends to last indefinitely but does not inherently provide any flavour to the meat or other foods being barbequed thereon. In the process of barbequing on the grill, the only flavour imparted by the lava rock is due to smoke and vapours produced by the fats of the meat or barbeque sauce thereon which tend to fall down through the grill onto the lava rock and be vaporized. The distinctive charcoal flavour associated with barbequing on a conventional grill is not present in a gas or electric grill utilizing lava rock as "briquets" and a primary heat source other than the lava rock.

The present invention aims to overcome the deficiencies of lava rock as a flavour-producing material while maintaining its non-shedding character by providing a briquet comprising a clay carrier incorporating a combustible flavour-producing material. The clay carrier maintains the integrity of the briquet during combustion to leave only a hard shell residue after complete combustion of the flavour-producing material. Although the use of clay as an element in a briquet composition is known in the art of briquet manufacturing, all use known to us to date has been in relatively small percentage amounts by weight and for different purposes.

For example, U.S. Patent No. 4,167,398 discloses a charcoal briquet utilizing an inexpensive binding composition consisting of sodium bentonite clay and a water soluble acid polymer which apparently makes up about one percent to ten percent by weight of the charcoal briquet. Also, U.S. Patent No 3,485,599 discloses the use of about three percent to four percent by weight of bentonite clay in a rapid ignition charcoal briquet as a retarder to prevent the briquet from burning too rapidly after ignition or from igniting spontaneously.

Another prior art Patent is U.S. Patent No. 3,689,234 which discloses an instantly ignitable charcoal briquet utilizing about 8 percent to 12 percent by weight of a clay such as bentonite, kaolin and the like as a combustion buffer to regulate the ignition of the readily ignitable charcoal briquet. Still another use of clay in a charcoal briquet is disclosed in U.S. Patent No. 3,402,033 wherein about 1 to 15 percent by weight of a non-hydratable clay is utilized in the briquet composition to prevent plugging of a die face during extrusion of the composition prior to its formation into a briquet.

Therefore, although it is known to utilize a small percentage by weight of clay in a charcoal briquet composition for a variety of purposes, we are not aware of a briquet composition which is suitable for use in a barbeque and utilizes a higher percentage by weight of clay as a carrier, to form a hard shell during the combustion process. Moreover, we are not aware of any prior art briquet which utilizes clay in a manner in accordance with the present invention, to provide a flavour-producing briquet which lends itself to use in gas and electric grills since it does not shed ash as do conventional charcoal briquets.

GB 127 775 discloses, in 1919, a proposal to manufacture an artificial fuel utilising certain parts of a palm tree which form the waste products of certain processes by which oils and potash are extracted therefrom. Palm nut shells and pericarp residues in their natural proportions are mixed with potassium-impregnated clay from ovens in which palm tree trunks have been burnt, together with coal dust, charcoal or other carbonaceous matter, all in specific relative proportions. It is claimed that, in this way, a fuel is produced that generates a great heat when red hot, burns slowly without crumbling, but when broken will make a clean fire like cinders and produce little if any smoke and leave little ash. The specification is silent, however, as to any odours produced during burning of the fuel, and as to the acceptability or otherwise of any such odours for the purposes of cooking directly over the fuel. No suggestion is made, and no teaching is given in the specification, as to the use or suitability of the fuel as a briquet suitable for direct cooking purposes, as in barbequing.

According to a first aspect of the present invention, there is provided a combustible briquet for use in a barbeque in which food is cooked over the briquet such that flavour produced during combustion of the briquet is imparted to the food during cooking, characterised in that the briquet comprises from 30 percent to 80 percent by weight of clay and from 20 percent to 70 percent by weight of at least one combustible flavour-producing material such that, during combustion of said combustible flavour-producing material(s), the clay forms a hard shell which serves to retain ash formed during said combustion, and the or at least one of the combustible flavour-producing material(s) is a fibrous material selected from the group consisting of oak, hickory, mesquite, maple, alder, cherry, sassafras, spice hulls, spices, and mixtures thereof.

Preferably, said clay is a member selected from the group consisting of montmorillonite, bentonite, kaolinite, ball clay, and mixtures thereof.

Preferably, the or at least one of the combustible flavour-producing material(s) is a carbonaceous material.

Preferably, said carbonaceous material is selected from the group consisting of charcoal, coal, and mixtures thereof.

Preferably, said carbonaceous material is charcoal.

In a preferred embodiment, said fibrous material is hickory - preferably, hickory sawdust.

A combustible briquet in accordance with the invention may comprise at least 40 percent by weight of said clay and at least 40 percent by weight of said combustible flavour-producing material(s).

A combustible briquet in accordance with the invention may comprise about 50 percent by weight of said clay and about 50 percent by weight of said combustible flavour-producing material(s).

A combustible briquet in accordance with the invention may comprise about 25 percent by weight of carbonaceous material and about 25 percent by weight of fibrous material.

A combustible briquet in accordance with the invention may include at least five percent by weight of a hydraulic cement.

A combustible briquet in accordance with the invention may comprise from 10 percent to 20 percent by weight of hydraulic cement.

Preferably, said hydraulic cement is Portland cement.

A combustible briquet in accordance with the invention may comprise from 1 to 15 percent by weight of a starch binder.

A combustible briquet in accordance with the invention may include at least five percent by weight of a starch binder.

Preferably, the colour of the briquet before first use is different to that after all of said combustible flavour-producing material(s) has or have been burnt.

Such a briquet before first use may be of a dark brown colour.

Such a briquet after all of said combustible flavour producing material(s) has or have been burnt may be of an orange colour.

The invention also extends to use of a barbeque having a primary heat source and a plurality of briquets disposed over said primary heat source, the briquets being as above, in accordance with the first aspect of the invention.

Preferably, said primary heat source is powered by gas, electricity or oil.

For a better understanding of the invention, and to show how the same may be carried into effect, some examples thereof will now be described.

First of all, we would like to observe that a conventional charcoal briquet would typically consist essentially of about 40 percent charcoal, 20 percent limestone, 10 percent starch, and 30 percent of either lignite or anthracite coal. This type of briquet normally has about 10,000 B.t.u. (10550 kJ) of heat and would be used in a conventional barbeque grill as a heat source. The charcoal serves to provide dry heat and flavour to meat or other foods being grilled, the limestone serves as a catalyst for the heat, the starch serves as a binder for the briquet composition, and the coal serves as a heat source. Also, it is known to provide about 2 percent nitrate as an oxidizer to facilitate burning and 0.5 percent borax as a slicking agent for a charcoal briquet.

Such a conventional charcoal briquet is utilized in barbeque grills as both the source of heat and flavour for barbeque cooking of meat and other foods. Its shortcoming is that it cannot practically be used in a gas or electric grill since it will turn to ash and be detrimental to proper functioning of the grill. Of course, this ash is not of concern in a conventional grill since it is merely discarded when it becomes too voluminous. Prior to that time, it serves as an advantageous bed for charcoal briquets utilized in barbeque grilling.

A combustible briquet in accordance with the present invention is unique in that, unlike lava rock normally utilized in a gas or electric grill, it includes combustible flavour-producing material within a clay carrier which serves to form a hard shell and prevent the flaking of ash during the combustion process. Thus, such a combustible briquet may provide the flavour of conventional charcoal briquets but without their characteristic tendency to break down or form ash during the combustion process. Although gas and electric grills are discussed herein, it should be understood that combustible briquets in accordance with the invention may be used with any grill utilizing a self-contained primary heat source such as a gas grill, electric grill and oil grill.

A combustible briquet in accordance with the present invention comprises from 30 percent to 80 percent by weight of clay and from 20 percent to 70 percent by weight of at least one combustible flavour-producing material. The clay may be of a number of types including hydrated montmorillonite, Western bentonite, kaolinite, and ball clay. The combustible flavour-producing material may be a carbonaceous material such as charcoal, lignite coal or anthracite coal, or mixtures thereof. Also, the combustible material may be a fibrous material such as oak, hickory, mesquite, maple, alder, cherry, and sassafras wood in addition to spice hulls, nut shells, spices and mixtures of all of the foregoing fibrous materials. The combustible flavour-producing material within the briquet may also be a mixture of the aforementioned carbonaceous material and fibrous material.

A preferred briquet composition consists essentially of hydrated montmorillonite clay, charcoal derived from hickory wood, and hickory wood sawdust or chips, wherein the clay makes up at least 50 percent by weight of the composition. Two preferred briquet compositions are set forth below, purely by way of example, for a better understanding of the invention. The compositions are manufactured and the briquets produced according to conventional means known to those skilled in the charcoal briquet manufacturing art.

### EXAMPLE 1

| | Percent |
|---|---|
| Hydrated montmorillonite clay | 50% |
| Charcoal (derived from hickory sawdust) | 50% |

### EXAMPLE 2

| | Percent |
|---|---|
| Hydrated montmorillonite clay | 50% |
| Charcoal (derived from hickory sawdust) | 25% |
| Hickory (sawdust or chips) | 25% |

It is possible to substitute for any of these preferred elements from the substitutes therefor set forth above and to vary the relative weight percentages. However, the preferred compositions described above have been found to be particularly effective in providing flavour to meat or other food being barbequed on a gas or electric grill and in not allowing any flaking of ash during the combustion of the flavour-producing elements within the briquet.

Such briquet compositions should provide flavour-producing combustion for approximately 10 hours prior to achieving complete combustion and leaving only a hard ceramic shell. Once complete combustion has occurred, the ceramic shell will no longer be able to impart aromatic smell and flavour to food being grilled but may serve as a conventional lava rock-type of briquet. In this form, it will still provide some amount of flavour to the food being cooked, due to juices dropping onto the shell and being vaporised into a smoke. However, if the enhanced flavour of the original briquets is desired, the fully combusted briquets, or a portion thereof, may be removed and replaced with new briquets.

Coal is not normally an element of preferred embodiments of the combustible briquet since it is primarily a heat source for conventional charcoal briquets and is not required for a briquet to be utilized in a gas grill. However, as a matter of choice, anthracite or lignite coal may be included in a briquet composition in accordance with the present invention, as an auxiliary heat source. The preferred combustible briquet compositions described above will release about 6,000 B.t.u. (6330 kJ) of heat, versus about 10,000 B.t.u. (10550 kJ) for a conventional briquet. However, as observed, the briquet is not the sole source of heat in a gas grill and the additional B.t.u. (kJ) are not essential for satisfactory barbeque grilling thereon.

Of interest, as a briquet as described above as an example of the present invention is burned, it may turn in colour from an original dark-brown appearance to an intermediate black appearance, due to oils or volatiles being driven from the charcoal (or charcoal and wood) to the outer surface of the briquet during combustion. Finally, the briquet may assume an orange or ceramic look when all of the combustibles in the original briquet have been fully burned. As noted earlier, in this form the briquet may serve to function as a conventional lava rock-type of briquet such as those presently utilized in gas grills.

We have found that the briquet can be further hardened, if desired, by adding between 10 percent to 20 percent by weight, preferably about 15 percent weight, of a hydraulic cement such as Portland cement. This can enhance the performance of the fully combusted briquet as a lava rock-type of briquet. We have also found that, as a matter of choice, a small amount of starch can be added to the briquet composition in order to enhance the adhesiveness of the briquet between the time it is removed from the press until it has dried. 1 percent to 15 percent by weight of a starch or binder such as corn starch, wheat starch and potato starch may be utilized, if the additional adhesiveness is desired in the manufacture of our novel briquets.

For a still fuller understanding of the invention, a typical chemical composition (moisture-free) of one preferred clay carrier, hydrated montmorillonite, is set forth below:

| | |
|---|---|
| Silica | 56.00 - 59.00% as SiO₂ |
| Alumina | 18.00 - 21.00% as Al₂O₃ |
| Iron (Ferric) | 5.00 - 8.50% as Fe₂O₃ |
| Iron (Ferrous) | 0.37 - 0.65% as FeO |
| Magnesium | 3.00 - 3.30% as MgO |
| Sodium & Potassium | 0.84 - 1.25% as Na₂O |
| Calcium | 1.20 - 3.50% as CaO |
| Titanium | 0.80 - 0.86% as TiO₂ |
| Carbon | 0.45 - 1.20% as CO₂ |
| Sulfur | 0.09 - 0.16% as SO₂ |
| Crystal Water | 5.00 - 6.00% as H₂O |

Montmorillonite clay is represented by the chemical formula AL₂O₃ 4SiO₂ H₂O and can be obtained from a number of suppliers (including Edward Lowe Industries, Inc. of South Bend, Indiana) in a form which can be processed on conventional briquet manufacturing equipment to create briquets embodying the present invention. The moisture content of the montmorillonite clay as shipped from the supplier is 5 to 10 percent.

One of the most important characteristics of the combustible briquet compositions described herein as embodiments of the invention is the ability of the briquet to provide charcoal or charcoal and wood flavour to food being grilled thereon, without ashes flaking therefrom as the flavour-producing material is combusted. By incorporating a clay as a carrier for the flavour-producing material, the briquet will maintain its shape during combustion of the flavour-producing material contained therein and serve as a conventional lava rock-type of briquet thereafter.

## Claims

1. A combustible briquet for use in a barbeque in which food is cooked over the briquet such that flavour produced during combustion of the briquet is imparted to the food during cooking, characterised in that the briquet comprises from 30 percent to 80 percent by weight of clay and from 20 percent to 70 percent by weight of at least one combustible flavour-producing material such that, during combustion of said combustible flavour-producing material(s), the clay forms a hard shell which serves to retain ash formed during said combustion, and the or at least one of the combustible flavour-producing material(s) is a fibrous material selected from the group consisting of oak, hickory, mesquite, maple, alder, cherry, sassafras, spice hulls, spices, and mixtures thereof.

2. A combustible briquet according to claim 1, wherein said clay is a member selected from the group consisting of montmorillonite, bentonite, kaolinite, ball clay, and mixtures thereof.

3. A combustible briquet according to claim 1 or 2, including a carbonaceous material as one said combustible flavour-producing material.

4. A combustible briquet according to claim 3, wherein said carbonaceous material is selected from the group consisting of charcoal, coal, and mixtures thereof.

5. A combustible briquet according to claim 4, wherein said carbonaceous material is charcoal.

6. A combustible briquet according to any of the preceding claims, wherein said fibrous material is hickory.

7. A combustible briquet according to claim 6, wherein said hickory is sawdust.

8. A combustible briquet according to any of the preceding claims, comprising at least 40 percent by weight of said clay and at least 40 percent by weight of said combustible flavour-producing material(s).

9. A combustible briquet according to claim 8, comprising about 50 percent by weight of said clay and about 50 percent by weight of said combustible flavour-producing material(s).

10. A combustible briquet according to claims 8 and 9 as appendant to claim 3, 4 or 5, comprising about 25 percent by weight of said carbonaceous material and about 25 percent by weight of said fibrous material.

11. A combustible briquet according to any of claims 1 to 8, including at least five percent by weight of a hydraulic cement.

12. A combustible briquet according to claim 11, comprising from 10 percent to 20 percent by weight of said hydraulic cement.

13. A combustible briquet according to claim 11 or 12, wherein said hydraulic cement is Portland cement.

14. A combustible briquet according to any of claims 1 to 8, or according to claim 11, 12 or 13, comprising from 1 to 15 percent by weight of a starch binder.

15. A combustible briquet according to any of claims 1 to 8 or any of claims 11 to 14, including at least five percent by weight of a starch binder.

16. A combustible briquet according to any of the preceding claims, wherein the colour of the briquet before first use is different to that after all of said combustible flavour-producing material(s) has or have been burnt.

17. A combustible briquet according to claim 16, wherein the briquet before first use is of a dark brown colour.

18. A combustible briquet according to claim 17, wherein the briquet after all of said combustible flavour producing material(s) has or have been burnt is of an orange colour.

19. Use of a barbeque having a primary heat source and a plurality of briquets disposed over said primary heat source, characterised in that the briquets are in accordance with any of claims 1 to 18.

20. Use of a barbeque according to claim 19, wherein said primary heat source is powered by gas, electricity or oil.

## Patentansprüche

1. Brennbarer Brikett zur Verwendung in einem Grill, in welchem Lebensmittel über dem Brikett gebraten werden, so daß das während der Verbrennung des Briketts erzeugte Aroma an das Lebensmittel beim Braten abgegeben wird, **dadurch gekennzeichnet**, daß der Brikett 30 bis 80 Gew.-% Ton und 20 bis 70 Gew.-% von mindestens einem brennbaren aromaerzeugenden Material umfaßt, so daß während der Verbrennung des mindestens einen brennbaren aromaerzeugenden Materials der Ton eine harte Schale bildet, die dazu dient, während der Verbrennung gebildete Asche zurückzuhalten, und das oder mindestens eines der brennbaren aromaerzeugenden Materialien ein faseriges Material ist, ausgewählt aus der Gruppe bestehend aus Eiche, Walnuß (Hickory), Süßhülsenbaum (Mesquit), Ahorn, Erle, Kirsche, Sassafras, Gewürzschalen, Gewürzen und Gemischen davon.

2. Brennbarer Brikett nach Anspruch 1, worin der Ton ein Bestandteil ist, ausgewählt aus der Gruppe bestehend aus Montmorillonit, Bentonit, Kaolinit, Bindeton und Gemischen davon.

3. Brennbarer Brikett nach Anspruch 1 oder 2, welcher ein kohlenstoffhaltiges Material als brennbares aromaerzeugendes Material enthält.

4. Brennbarer Brikett nach Anspruch 3, worin das kohlenstoffhaltige Material ausgewählt ist aus der Gruppe bestehend aus Holzkohle, Kohle und Gemischen davon.

5. Brennbarer Brikett nach Anspruch 4, worin das kohlenstoffhaltige Material Holzkohle ist.

6. Brennbarer Brikett nach einem der vorhergehenden Ansprüche, worin das faserige Material Walnuß ist.

7. Brennbarer Brikett nach Anspruch 6, worin das Walnuß-Material Sägespäne sind.

8. Brennbarer Brikett nach einem der vorhergehenden Ansprüche, umfassend mindestens 40 Gew.-% des Tons und mindestens 40 Gew.-% des mindestens einen brennbaren aromaerzeugenden Materials.

9. Brennbarer Brikett nach Anspruch 8, umfassend etwa 50 Gew.-% des Tons und etwa 50 Gew.-% des mindestens einen brennbaren aromaerzeugenden Materials.

10. Brennbarer Brikett nach den Ansprüchen 3, 4, 5, 8 oder 9, umfassend etwa 25 Gew.-% des kohlenstoffhaltigen Materials und etwa 25 Gew.-% des faserigen Materials.

11. Brennbarer Brikett nach einem der Ansprüche 1 bis 8, welcher mindestens 5 Gew.-% eines hydraulischen Zements einschließt.

12. Brennbarer Brikett nach Anspruch 11, umfassend 10 bis 20 Gew.-% des hydraulischen Zements.

13. Brennbarer Brikett nach Anspruch 11 oder 12, worin der hydraulische Zement Portlandzement ist.

14. Brennbarer Brikett nach einem der Ansprüche 1 bis 8, oder nach Anspruch 11, 12 oder 13, umfassend 1 bis 15 Gew.-% eines Stärkebindemittels.

15. Brennbarer Brikett nach einem der Ansprüche 1 bis 8, oder einem der Ansprüche 11 bis 14, welcher mindestens 5 Gew.-% eines Stärkebindemittels einschließt.

16. Brennbarer Brikett nach einem der vorhergehenden Ansprüche, worin die Farbe des Briketts vor der ersten Verwendung verschieden ist von der Farbe, nachdem das gesamte mindestens eine brennbare aromaerzeugende Material verbrannt ist.

17. Brennbarer Brikett nach Anspruch 16, worin der Brikett vor der ersten Verwendung eine dunkelbraune Farbe hat.

18. Brennbarer Brikett nach Anspruch 17, worin der Brikett eine orange Farbe hat, nachdem das gesamte mindestens eine brennbare aromaerzeugende Material verbrannt ist.

19. Verwendung eines Grills mit einer primären Wärmequelle und einer Vielzahl von Briketts, die über der primären Wärmequelle angeordnet sind, **dadurch gekennzeichnet**, daß die Briketts nach einem der Ansprüche 1 bis 18 sind.

20. Verwendung eines Grills nach Anspruch 19, worin die primäre Wärmequelle durch Gas, Elektrizität oder Öl bereitgestellt wird.

## Revendications

1. Briquette combustible destinée à être utilisée dans un barbecue dans lequel un aliment est cuit sur la briquette afin qu'une odeur dégagée au cours de la combustion de la briquette se communique à l'aliment pendant sa cuisson, caractérisée en ce que la briquette contient de 30 pour cent à 80 pour cent en poids d'argile et de 20 pour cent à 70 pour cent en poids d'au moins une substance combustible odoriférante de façon que, pendant la combustion de ladite ou desdites substance(s) combustible(s) odoriférante(s), l'argile forme une enveloppe dure servant à retenir des cendres formées pendant ladite combustion, et en ce que la ou les substance(s) combustible(s) odoriférante(s) consiste(nt) en une substance fibreuse choisie dans le groupe constitué par le chêne, l'hickory, la mesquite, l'érable, l'aulne, le cerisier, le sassafras, les coquilles d'épices, les épices, et leurs mélanges.

2. Briquette combustible selon la revendication 1, dans laquelle ladite argile est un élément choisi dans le groupe constitué par la montmorillonite, la bentonite, la kaolinite, l'argile plastique, et leurs mélanges.

3. Briquette combustible selon la revendication 1 ou 2, contenant une substance charbonneuse formant ladite substance combustible odoriférante.

4. Briquette combustible selon la revendication 3, dans laquelle ladite substance charbonneuse est choisie dans le groupe constitué par le charbon de bois, la houille, et leurs mélanges.

5. Briquette combustible selon la revendication 4, dans laquelle ladite substance charbonneuse est de la houille.

6. Briquette combustible selon l'une quelconque des revendications précédentes, dans laquelle ladite substance fibreuse est de l'hickory.

7. Briquette combustible selon la revendication 6, dans laquelle ledit hickory est de la sciure.

8. Briquette combustible selon l'une quelconque des revendications précédentes, contenant au moins 40 pour cent en poids de ladite argile et au moins 40 pour cent en poids de ladite ou desdites substance(s) combustible(s) odoriférante(s).

9. Briquette combustible selon la revendication 8, contenant environ 50 pour cent en poids de ladite argile et environ 50 pour cent en poids de ladite ou desdites substance(s) combustible(s) odoriférante(s).

10. Briquette combustible selon les revendications 8 et 9, lorsqu'elles sont dépendantes de la revendication 3, 4 ou 5, contenant environ 25 pour cent en poids de ladite substance charbonneuse et environ 25 pour cent en poids de ladite substance fibreuse.

11. Briquette combustible selon l'une quelconque des revendications 1 à 8, contenant au moins cinq pour cent en poids d'un ciment hydraulique.

12. Briquette combustible selon la revendication 11, contenant de 10 pour cent à 20 pour cent en poids dudit ciment hydraulique.

13. Briquette combustible selon la revendication 11 ou 12, dans laquelle ledit ciment hydraulique est du ciment Portland.

14. Briquette combustible selon l'une quelconque des revendications 1 à 8, ou selon la revendication 11, 12 ou 13, contenant de 1 à 15 pour cent en poids d'un liant à base d'amidon.

15. Briquette combustible selon l'une quelconque des revendications 1 à 8 ou l'une quelconque des revendications 11 à 14, contenant au moins cinq pour cent en poids d'un liant à base d'amidon.

16. Briquette combustible selon l'une quelconque des revendications précédentes, dans laquelle la couleur de la briquette avant sa première utilisation est différente de sa couleur après combustion de la totalité de ladite ou desdites substance(s) combustible(s) odoriférante(s).

17. Briquette combustible selon la revendication 16, dans laquelle, avant utilisation, la briquette a une couleur brun foncé.

18. Briquette combustible selon la revendication 17, dans laquelle la briquette a, après combustion de la totalité de ladite ou desdites substance(s) combustible(s) odoriférante(s), une couleur orange.

19. Utilisation d'un barbecue comportant une source de chaleur principale et plusieurs briquettes disposées au-dessus de ladite source de chaleur principale, caractérisée en ce que les briquettes sont conformes à l'une quelconque des revendications 1 à 18.

20. Utilisation d'un barbecue selon la revendication 19, dans laquelle ladite source de chaleur principale est alimentée en gaz, en électricité ou en huile.
